(19) **Europäisches Patentamt / European Patent Office / Office européen des brevets**

(11) **EP 4 730 724 A1**

(12) # EUROPEAN PATENT APPLICATION
published in accordance with Art. 153(4) EPC

(43) Date of publication:
**22.04.2026 Bulletin 2026/17**

(21) Application number: **23941113.5**

(22) Date of filing: **16.06.2023**

(51) International Patent Classification (IPC):
***H04L 27/26*** *(2006.01)*

(52) Cooperative Patent Classification (CPC):
**H04L 27/26**

(86) International application number:
**PCT/CN2023/100852**

(87) International publication number:
**WO 2024/254880 (19.12.2024 Gazette 2024/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Beijing Xiaomi Mobile Software Co., Ltd.**
**Beijing 100085 (CN)**

(72) Inventors:
• **DUAN, Gaoming**
  **Beijing 100085 (CN)**
• **CHI, Liangang**
  **Beijing 100085 (CN)**

(74) Representative: **Dehns Germany Partnerschaft mbB**
**Theresienstraße 6-8**
**80333 München (DE)**

(54) **COMMUNICATION RESOURCE DETERMINATION METHOD AND APPARATUS AND DEVICE**

(57)    The present disclosure relates to the technical field of communications, and provides a communication resource determination method and apparatus and a device. The method comprises: determining a scheduling unit of a delay-Doppler (DD) domain, wherein the scheduling unit is used for a orthogonal time-frequency space (OTFS) modulation system. According to the method disclosed in the present disclosure, a scheduling unit of a DD domain is determined, so that the design of a scheduling unit for an OTF system in the DD domain is realized, a signal and/or data can be mapped to the designed scheduling unit, and thus communication tasks such as signal an/or data transmission are carried out by utilizing the scheduling unit.

101

determining a scheduling unit in a DD domain

FIG. 1

EP 4 730 724 A1

## Description

## TECHNICAL FIELD

The present disclosure relates to a field of communication technology, and specifically to a method and an apparatus for determining a communication resource, and a device.

## BACKGROUND

Orthogonal time frequency space (OTFS) modulation is a two-dimensional modulation scheme designed in a delay-Doppler (DD) domain. Through two-dimensional transformation, a doubly dispersive channel may be converted into an approximately flat fading channel in the DD domain. In the related art, there is no design for a scheduling unit for an OTFS system in the DD domain.

## SUMMARY

The present disclosure provides a method and an apparatus for determining a communication resource, and a device, performed by a first device, which determines a scheduling unit in a delay-Doppler (DD) domain, thus achieving a design of the scheduling unit in the DD domain adaptable to the OTFS system.

According to a first aspect, the embodiments of the present disclosure provide a method for determining a communication resource, performed by a first terminal, including: determining a scheduling unit in a DD domain, in which the scheduling unit is for an orthogonal time frequency and space (OTFS) modulation system.

In some embodiments of the present disclosure, parameters of the scheduling unit include first parameters and second parameters, the first parameters include: $M$, being a number of symbols of the scheduling unit in a delay domain; and $N$, being a number of subcarriers of the scheduling unit in a Doppler domain, and the second parameters include: $t$, being a duration of each symbol of the scheduling unit in the delay domain; and $f$, being a spacing of each subcarrier of the scheduling unit in the Doppler domain.

In some embodiments of the present disclosure, the first parameters satisfy at least one of: $M=M'$, where $M'$ represents a number of subcarriers of the scheduling unit in a frequency domain in a time-frequency domain; or $N=N'$, where $N'$ represents a number of symbols of the scheduling unit in a time domain in a time-frequency domain.

In some embodiments of the present disclosure, $M=m \times a$, where $m$ represents a number of resource blocks (RBs) included in the scheduling unit in a frequency domain, $a$ represents a number of subcarriers included in each RB, where $m$ is a positive integer; and $N=n \times b$, where $n$ represents a number of time units included in the scheduling unit in a time domain, $b$ represents a number of symbols included in each time unit, and $n=2^k$, where $k$ is an integer greater than or equal to 0.

In some embodiments of the present disclosure, in a case where a first cyclic prefix (CP) is inserted into the scheduling unit, $a=12$; and $b=14$.

In some embodiments of the present disclosure, in a case where a second CP is inserted into the scheduling unit, $a=12$; and $b=12$.

In some embodiments of the present disclosure, the second parameters satisfy at least one of:

$$t=\frac{1}{M'f_c}$$ , where $M'$ represents the number of subcarriers of the scheduling unit in a frequency domain in a time-frequency domain, and $f_c$ represents the spacing of the each subcarrier in the frequency domain in the time-frequency domain; or $$f=\frac{1}{N'T}$$ , where $N'$ represents the number of symbols of the scheduling unit in a time domain in a time-frequency domain, and $T$ represents a duration of each symbol in the time domain in the time-frequency domain.

In some embodiments of the present disclosure, in a case where a first CP or a second CP is inserted into the scheduling unit, $f_c=15 \times 10^3 \times 2^k$, where $k$ is an integer greater than or equal to 0; and

$$T'=\frac{1}{15\times10^3\times2^k}$$ .

In some embodiments of the present disclosure, in a case where a first CP is not inserted into the scheduling unit, $f_c=15 \times 10^3 \times 2^k$, where $k$ is an integer greater than or equal to 0; and $$T=\frac{1}{14\times10^3\times2^k}$$ .

In some embodiments of the present disclosure, in a case where a second CP is not inserted into the scheduling unit, $f_c=15 \times 10^3 \times 2^k$, where $k$ is an integer greater than or equal to 0; and

$$T=\frac{1}{12\times10^3\times2^k}$$ .

In some embodiments of the present disclosure, in a case where a second CP is not inserted into the scheduling unit, $k$ is 2, that is, $f_c = 6 \times 10^4$, at this time

$$T'=\frac{1}{48\times10^3}$$ .

In some embodiments of the present disclosure, a sampling period for CP insertion into the scheduling unit is represented by T1, a number of sampling points is represented by K, and the CP is inserted every $l$ symbols in the scheduling unit in a time domain, where $1 \leq l \leq 14$.

In some embodiments of the present disclosure, T1 is a time unit, K is 2048, and *l* =1, in which a number of sampling points for 0-th CP and 7-th CP of the scheduling unit in the time domain is 160, and a number of sampling points for other CPs is 144.

In some embodiments of the present disclosure, T1 is one time unit, K is 2048, and 1< *l* ≤14, in which the CP is inserted at starting positions of consecutive *l* symbols, and a number of sampling points for *k*-th CP inserted in T1 is: $K^k_{CP} = \sum_{i=1}^{l} K_i$ , where $K_i$ represents a number of sampling points for a CP inserted to *i*-th symbol in a case where the CP is inserted to each symbol in T1, and $i \le l$.

In some embodiments of the present disclosure, the method further includes: mapping a signal and/or data to the scheduling unit.

According to a second aspect, the embodiments of the present disclosure provide an apparatus for determining a communication resource, including a processing unit, configured to determine a scheduling unit in a DD domain, in which the scheduling unit is for an OTFS modulation system.

According to a third aspect, the embodiments of the present disclosure provide a communication device, including: a transceiver; a memory; and a processor, connected to the transceiver and the memory respectively, and configured to control wireless signal transmission and reception of the transceiver by executing computer-executable instructions on the memory and to cause the device to implement the method according to the above first aspect.

According to a fourth aspect, the embodiments of the present disclosure provide a computer storage medium, for storing computer-executable instructions that, when executed by a processor, cause the method according to the above first aspect to be implemented.

## BRIEF DESCRIPTION OF THE DRAWINGS

The above and/or other aspects and advantages of embodiments of the present disclosure will become apparent and more readily appreciated from the following descriptions made with reference to the accompanying drawings.

FIG. 1 is a flowchart of a method for determining a communication resource according to an embodiment of the present disclosure.
FIG. 2 is a flowchart of a process of an orthogonal time frequency and space (OTFS)-orthogonal frequency division multiplexing (OFDM) system according to an embodiment of the present disclosure.
FIG. 3 is a schematic diagram of a method for inserting a cyclic prefix (CP) for a symbol within a time unit according to an embodiment of the present disclosure.
FIG. 4 is a schematic diagram of a method for inserting a CP for a symbol within a time unit according to an embodiment of the present disclosure.
FIG. 5 is a flowchart of a method for determining a communication resource according to an embodiment of the present disclosure.
FIG. 6 is a block diagram of an apparatus for determining a communication resource according to an embodiment of the present disclosure.
FIG. 7 is a block diagram of a communication device according to an embodiment of the present disclosure.
FIG. 8 is a block diagram of a structure of a communication device being a chip or a chip system according to an embodiment of the present disclosure.

## DETAILED DESCRIPTION

Exemplary embodiments will be described in detail herein, examples of which are illustrated in the accompanying drawings. When the following description refers to the accompanying drawings, the same or similar elements may be denoted by the same numerals in different accompanying drawings, unless otherwise indicated. The implementations described in the following exemplary embodiments do not represent all implementations consistent with the disclosure. Instead, they are merely examples of apparatuses and methods consistent with aspects of embodiments of the disclosure as detailed in the appended claims.

The term employed in the embodiments of disclosure is merely for the purpose of describing a detailed embodiment, and is not intended to limit embodiments of the disclosure. As used in the embodiments of the disclosure and the appended claims, a singular form "a/an" or "the/said" is also intended to include plural forms, unless the context clearly indicates other meaning. It should also be understood that, the term "and/or" as used herein refers to including any or all possible combinations of one or more associated listed items.

It should be understood that, although the terms such as "first, second, third" may be employed in the embodiments of the disclosure to describe various kinds of information, the information should not be limited to these terms. These terms are merely used to distinguish a same type of information from each other. For example, without departing from a scope of embodiments of the disclosure, first information may also be called second information, and similarly, the second information may also be called the first information. Depending on the context, the word "if" as used herein may be interpreted as "when" or "in a case where..." or "in response to a determination".

It should be understood that, in the embodiments of the present disclosure, unless otherwise specified, the time unit in parameters and expressions is second (s), and the frequency unit is Hertz (Hz).

In some embodiments, "apparatus" may be interpreted as either a physical apparatus or a virtual apparatus. Names are not limited to those recorded in the embodiments. The terms such as "apparatus", "equipment", "device", "circuit", "network element", "node", "function", "unit", "section", "system", "network", "chip", "chip system", "entity", "subject", etc. may be used interchangeably.

In some embodiments, terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc. may be used interchangeably.

In some embodiments, an access network device, a core network device, or a network device may be replaced by a terminal. For example, the embodiments of the present disclosure may also be applied to a structure where communication between the access network device, the core network device, or the network device and the terminal is replaced by communication among a plurality of terminals (e.g., device-to-device (D2D), or vehicle-to-everything (V2X), etc.). In this case, the terminal may be set to have all or part of functions of the access network device. In addition, terms such as "uplink" and "downlink" may be replaced with terms corresponding to inter-terminal communication (e.g., "sidelink"). For example, an uplink channel or a downlink channel may be replaced with a sidelink channel; and an uplink or a downlink may be replaced with a sidelink.

In some embodiments, the terminal may be replaced with the access network device, the core network device, or the network device. In this case, the access network device, the core network device, or the network device may be set to have all or part of functions of the terminal.

In some embodiments, names of information and other elements are not limited to those specified in embodiments. Terms such as "information", "message", "signal", "signaling", "report", "configuration", "indication", "instruction", "command", "channel", "parameter", "domain", "field", "symbol", "codebook", "codeword", "codepoint", "bit", "data", "program", "chip", etc., may be used interchangeably.

In some embodiments, terms such as "reference signal", "pilot signal", etc. may be used interchangeably.

The embodiments of the present disclosure are described in detail below. Examples of the embodiments are shown in the accompanying drawings, throughout which the same or similar labels represent the same or similar elements or elements having the same or similar functions. The embodiments below with reference to the accompanying drawings are exemplary and are intended to explain the present disclosure, but should not be construed as a limitation to the present disclosure.

For convenience of understanding, terms in the present disclosure will be first introduced.

1. Orthogonal Time Frequency and Space (OTFS) Modulation

Orthogonal time frequency and space modulation is a two-dimensional modulation scheme designed in a delay-Doppler (DD) domain. Through a series of two-dimensional transformations, a doubly dispersive channel may be converted into an approximately flat fading channel in the DD domain. In this domain, each symbol in a data frame experiences same and nearly constant fading.

2. Cyclic Prefix (CP)

A CP is a cyclic structure formed by copying a segment of data from an end of a data symbol to a beginning of the symbol. Based on a length of the CP, the CP may be divided into a normal CP and an extended CP.

To solve a symbol interference in a time-frequency domain that occurs after data sent in the DD domain is mapped to the time-frequency domain via a dual Fourier transform, the CP may be inserted into the scheduling unit.

It needs to be noted that the method for determining a communication resource provided by any embodiment in the present disclosure may be implemented alone, or may be implemented in combination with possible implementations in other embodiments, and may also be implemented in combination with any technical solution in the related art.

The method and the apparatus for determining a communication resource, and the device provided in the present disclosure are described in detail in combination with accompanying drawings.

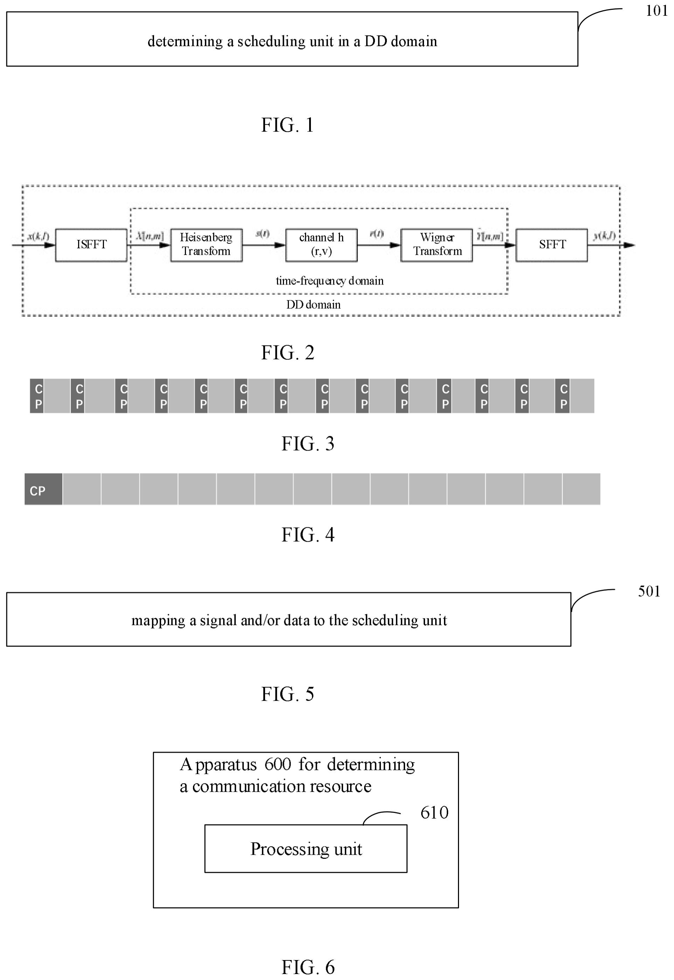

FIG. 1 is a flowchart of a method for determining a communication resource according to an embodiment of the present disclosure. The method is performed by a first device. As shown in FIG. 1, the method for determining a communication resource may include a following step at S101.

At S101, a scheduling unit in a DD domain is determined.

In some embodiments of the present disclosure, the first device may determine the scheduling unit in the DD domain, so that the first device may invoke the scheduling unit to perform a communication task.

In some embodiments of the present disclosure, the scheduling unit may be used for an orthogonal time frequency space (OTFS) system, and may also be used for an OTFS-orthogonal frequency division multiplexing (OFDM) system formed by fusion of an OTFS system and an OFDM system, for example, by adding a pre-processing module of inverse symplectic finite Fourier transform (ISFFT) at a sending end of the OFDM system, and simultaneously adding a symplectic finite Fourier transform (SFFT) module at a receiving end of the OFDM system, thus forming the OTFS-OFDM system, as shown in FIG. 2. The present disclosure does not limit an application system of the scheduling unit.

In some embodiments of the present disclosure, a name of the first device is not limited, which may be, for example, a "scheduling device", a "resource device", or the like.

In some embodiments of the present disclosure, the first device may be a device that schedules the communication resource, in which the communication resource that is scheduled may be a time-frequency resource in a time-frequency domain, or may be an OTFS resource in a DD domain, which is not limited in the present disclosure.

In some embodiments of the present disclosure, the first device may be a network device. It should be understood that, with the development of communication technology, the first device may also be a terminal, which is not limited in the present disclosure.

In some embodiments of the present disclosure, the first device may be a transmitting-end device, or may be a receiving-end device, which is not limited in the present disclosure.

In some embodiments of the present disclosure, an application transmission channel for determining a scheduling unit in a DD domain, which may be, for example, uplink transmission, downlink transmission, and sidelink transmission.

In some embodiments of the present disclosure, parameters of the scheduling unit include first parameters and second parameters, the first parameters include: $M$, being a number of symbols of the scheduling unit in a delay domain; and $N$, being a number of subcarriers of the scheduling unit in a Doppler domain, and the second parameters include: $t$, being a duration of each symbol of the scheduling unit in the delay domain; and $f$, being a spacing of each subcarrier of the scheduling unit in the Doppler domain.

In some embodiments of the present disclosure, the first parameters satisfy at least one of: $M=M'$, where $M'$ represents a number of subcarriers of the scheduling unit in a frequency domain in a time-frequency domain; or $N=N'$, where $N'$ represents a number of symbols of the scheduling unit in a time domain in a time-frequency domain.

Specifically, the number of symbols of the scheduling unit in the delay domain $M=m \times a$, where $m$ represents a number of resource blocks (RBs) included in the scheduling unit in a frequency domain, $a$ represents a number of subcarriers included in each RB, where $m$ is a positive integer; and $N=n \times b$, where $n$ represents a number of time units included in the scheduling unit in a time domain, $b$ represents a number of symbols included in each time unit, and $n=2^k$, where $k$ is an integer greater than or equal to 0. The above time unit may be a slot.

In an embodiment, in a case where a first CP is inserted into the scheduling unit, $a =12$; and $b =14$, in which the first CP is a normal CP.

In an embodiment, in a case where a second CP is inserted into the scheduling unit, $a = 12$; and $b =12$, in which the second CP is an extended CP.

In some embodiments of the present disclosure, the second parameters satisfy at least one of:

$$t=\frac{1}{M'f_c}$$

, where $M'$ represents the number of subcarriers of the scheduling unit in a frequency domain in a time-frequency domain, and $f_c$ represents the spacing of the each subcarrier in the frequency domain in the time-frequency domain; or

$$f=\frac{1}{N'T}$$

, where $N'$ represents the number of symbols of the scheduling unit in a time domain in a time-frequency domain, and $T$ represents a duration of each symbol in the time domain in the time-frequency domain.

In an embodiment, the CP is inserted into the scheduling unit, and the duration of the each symbol in the time domain in the time-frequency domain should satisfy

$$T'=\frac{1}{f_c}$$

, in which the CP may be a first CP or may be a second CP, and $f_c$ represents the spacing of the each subcarrier in the frequency domain in the time-frequency domain.

Specifically, In an embodiment, in a case where a first CP or a second CP is inserted into the scheduling unit, $f_c=15 \times 10^3 \times 2^k$, where $k$ is an integer greater than or equal to 0; and

$$T=\frac{1}{15\times10^3\times2^k}$$

. In other words, in a case where the first CP is inserted into the scheduling unit, $f_c=15 \times 10^3 \times 2^k$, where $k$ is an integer greater than or equal to 0; and

$$T=\frac{1}{15\times10^3\times2^k}$$

; in a case where the second CP is inserted into the scheduling unit, the spacing of the each subcarrier in the frequency domain in the time-frequency domain is $6 \times 10^4$, that is, $f_c=6 \times 10^4$, $k=2$, at this time

$$T'=\frac{1}{60\times10^3}$$

.

In an embodiment, in a case where no CP is inserted into the scheduling unit, the duration of the each symbol in the time domain in the time-frequency domain $T$ should be equal to a quotient of an absolute time unit divided by a total number of symbols within the absolute time unit, for example, one absolute time unit is $10^{-3}$ s, and there are 14 symbols within the absolute time unit, so $T$ should be equal to

$$\frac{1}{14\times10^3}$$

.

Specifically, In an embodiment, in a case where the first CP is not inserted into the scheduling unit, that is, there are 14 symbols within $10^{-3}$ s and no first CP is inserted before each symbol, so $f_c = 15 \times 10^3 \times 2^k$, where $k$ is an integer greater than or equal to 0; and

$$T = \frac{1}{14 \times 10^3 \times 2^k}$$

Specifically, In an embodiment, in a case where a second CP is not inserted into the scheduling unit, that is, there are 12 symbols within $10^{-3}$ s and no second CP is inserted before each symbol, $f_c = 15 \times 10^3 \times 2^k$, where $k$ is an integer greater than or equal to 0; and

$$T = \frac{1}{12 \times 10^3 \times 2^k}$$

Specifically, In an embodiment, in a case where a second CP is not inserted into the scheduling unit, the spacing of the each subcarrier in the frequency domain in the time-frequency domain is $6 \times 10^{-4}$, that is, $f_c = 6 \times 10^4$, k=2, at this time $T' = \frac{1}{48 \times 10^3}$.

In some embodiments of the present disclosure, the CP may be inserted into the scheduling unit by a following method: the CP is inserted every $l$ symbols in the scheduling unit in a time domain, where $1 \le l \le 14$, a sampling period for CP insertion into the scheduling unit is represented by T1, and a number of sampling points is represented by K.

Specifically, In an embodiment, T1 is a time unit, K is 2048, and $l$ =1, in which a number of sampling points for 0-th CP and 7-th CP of the scheduling unit in the time domain is 160, and a number of sampling points for other CPs is 144. In other words, the CP may be inserted independently for each time-domain symbol within one time unit. For example, as shown in FIG. 3, the sampling period is one slot and each slot has 2048 sampling points, so a number of sampling points for 0-th symbol CP and 7-th symbol CP is 160, and a number of sampling points for other symbol CPs is 144.

Specifically, In an embodiment, T1 is one time unit, K is 2048, and $1 < l \le 14$, in which the CP is inserted at starting positions of consecutive $l$ symbols, and a number of sampling points for $k$-th CP inserted in T1 is:

$$K^k_{CP} = \sum_{i=1}^{l} K_i$$

, where $K_i$ represents a number of sampling points for a CP inserted to $i$-th symbol in a case where the CP is inserted to each symbol in T1, and $i \le l$. In other words, the CP may be inserted for a part of symbols within one time unit based on a certain rule, and the number of sampling points for each CP may be the same or different. For example, as shown in FIG. 4, the sampling period is one slot and each slot has 2048 sampling points, so the CP may be inserted only to the first symbol, and the number of sampling points for this CP is 2048. For example, the sampling period is one slot, each slot has 2048 sampling points, so a CP may be inserted every 2 symbols, that is, a CP is inserted only before 0-th, 2-nd, 4-th, 6-th, 8-th, 10-th, and 12-th symbols.

In summary, according to the method for determining a communication resource provided in the present disclosure, the method includes: determining a scheduling unit in a DD domain, in which the scheduling unit is for an OTFS modulation system. By determining the scheduling unit in the DD domain, the method of the present disclosure achieves a design of the scheduling unit in the DD domain for the OTFS system, which enables a signal and/or data to be mapped into a designed scheduling unit, thus using the scheduling unit to perform a communication task such as sending the signal and/or the data.

FIG. 5 is a flowchart of a method for determining a communication resource according to an embodiment of the present disclosure. The method is performed by a first device. As shown in FIG. 5, the method for determining a communication resource may include a following step at S501.

At S501, a signal and/or data is mapped to the scheduling unit.

In some embodiments of the present disclosure, the first device may map the signal and/or the data to the scheduling unit to send the signal and/or the data using the scheduling unit.

In some embodiments of the present disclosure, a name of the first device is not limited, which may be, for example, a "scheduling device", a "resource device", or the like.

In some embodiments of the present disclosure, the first device may be a device that schedules the communication resource, in which the communication resource that is scheduled may be a time-frequency resource in a time-frequency domain, or may be an OTFS resource in a DD domain, which is not limited in the present disclosure.

In some embodiments of the present disclosure, the first device may be a network device. It should be understood that, with the development of communication technology, the first device may also be a terminal, which is not limited in the present disclosure.

In some embodiments of the present disclosure, the first device may be a transmitting-end device, or may be a receiving-end device, which is not limited in the present disclosure.

For example, in a case where the first device is a transmitting-end network device, the first device may map a channel state information reference signal (CSI-RS) to the scheduling unit to send the channel state information reference signal using the scheduling unit.

In summary, according to the method for determining a communication resource provided in the present disclosure, the method includes: mapping the signal and/or the data to the scheduling unit. The solution of the present disclosure uses the scheduling unit to perform a communication task such as transmitting the signal and/or the data by mapping the signal and/or the data to the scheduling unit, which may improve communication stability in a high mobility scenario and reduce high penetration loss of a signal in a scenario with fast and frequent signal switching.

FIG. 6 is a block diagram of an apparatus 600 for determining a communication resource according to an embodiment of the present disclosure.

As shown in FIG. 6, the apparatus 600 for determining a communication resource includes a processing unit 610, configured to determine a scheduling unit in a DD domain, in which the scheduling unit is for an OTFS modulation system.

In summary, according to the apparatus for determining a communication resource provided in the present disclosure, including determining that the apparatus is configured to determine the scheduling unit in the DD domain, in which the scheduling unit is for the OTFS modulation system. Thus, it may be seen that the method for determining a communication resource provided in the present disclosure achieves a design of the scheduling unit in the DD domain for the OTFS system by determining the scheduling unit in the DD domain, which enables the signal and/or the data to be mapped into a designed scheduling unit, thus using the scheduling unit to perform a communication task such as sending the signal and/or the data.

In some embodiments of the present disclosure, parameters of the scheduling unit include first parameters and second parameters, the first parameters include: $M$, being a number of symbols of the scheduling unit in a delay domain; and $N$, being a number of subcarriers of the scheduling unit in a Doppler domain, and the second parameters include: $t$, being a duration of each symbol of the scheduling unit in the delay domain; and $f$, being a spacing of each subcarrier of the scheduling unit in the Doppler domain.

In some embodiments of the present disclosure, the first parameters satisfy at least one of: $M=M'$, where $M'$ represents a number of subcarriers of the scheduling unit in a frequency domain in a time-frequency domain; or $N=N'$, where $N'$ represents a number of symbols of the scheduling unit in a time domain in a time-frequency domain.

In some embodiments of the present disclosure, $M=m \times a$, where $m$ represents a number of RBs included in the scheduling unit in a frequency domain, $a$ represents a number of subcarriers included in each RB, where $m$ is a positive integer; and $N=n \times b$, where $n$ represents a number of time units included in the scheduling unit in a time domain, $b$ represents a number of symbols included in each time unit, and $n=2^k$, where $k$ is an integer greater than or equal to 0.

In some embodiments of the present disclosure, in a case where a first CP is inserted into the scheduling unit, $a$ =12; and $b$ =14.

In some embodiments of the present disclosure, in a case where a second CP is inserted into the scheduling unit, $a$ =12; and $b$ =12.

In some embodiments of the present disclosure, the second parameters satisfy at least one of:

$$t = \frac{1}{M' f_c}$$ , where $M'$ represents the number of subcarriers of the scheduling unit in a frequency domain in a time-frequency domain, and $f_c$ represents the spacing of the each subcarrier in the frequency domain in the time-frequency domain; or $$f = \frac{1}{N'T}$$ , where $N'$ represents the number of symbols of the scheduling unit in a time domain in a time-frequency domain, and $T$ represents a duration of each symbol in the time domain in the time-frequency domain.

In some embodiments of the present disclosure, in a case where a first CP or a second CP is inserted into the scheduling unit, $f_c = 15 \times 10^3 \times 2^k$, where $k$ is an integer greater than or equal to 0; and

$$T = \frac{1}{15 \times 10^3 \times 2^k}$$ .

In some embodiments of the present disclosure, in a case where a first CP is not inserted into the scheduling unit, $f_c = 15 \times 10^3 \times 2^k$, where $k$ is an integer greater than or equal to 0; and $$T' = \frac{1}{14 \times 10^3 \times 2^k}$$ .

In some embodiments of the present disclosure, in a case where a second CP is not inserted into the scheduling unit, $f_c = 15 \times 10^3 \times 2^k$, where $k$ is an integer greater than or equal to 0; and

$$T = \frac{1}{12 \times 10^3 \times 2^k}$$ .

In some embodiments of the present disclosure, in a case where a second CP is not inserted into the scheduling unit, $k$ is 2, that is, $f_c = 6 \times 10^4$, at this time

$$T' = \frac{1}{48 \times 10^3}$$ .

In some embodiments of the present disclosure, a sampling period for CP insertion into the scheduling unit is represented by T1, a number of sampling points is represented by K, and the CP is inserted every $I$ symbols in the scheduling unit in a time domain, where $1 \leq I \leq 14$.

In some embodiments of the present disclosure, T1 is a time unit, which specifically may be

$$T = \frac{1}{15 \times 10^3 \times 2^k}$$ , K is 2048, and $I$ =1, in which a number of sampling points for 0-th CP and 7-th CP of the scheduling unit in the time domain is 160, and a number of sampling points for other CPs is 144.

In some embodiments of the present disclosure, T1 is one time unit, which specifically may be

$$T = \frac{1}{15 \times 10^3 \times 2^k}$$

, K is 2048, and $1 < l \le 14$, in which the CP is inserted at starting positions of consecutive $l$ symbols, and a number of sampling points for $k$-th CP inserted in T1 is: $K^k_{CP} = \sum_{i=1}^{l} K_i$ , where $K_i$ represents a number of sampling points for a CP inserted to $i$-th symbol in a case where the CP is inserted to each symbol in T1, and $i \le l$.

In some embodiments of the present disclosure, the processing unit 610 is further configured to map a signal and/or data to the scheduling unit.

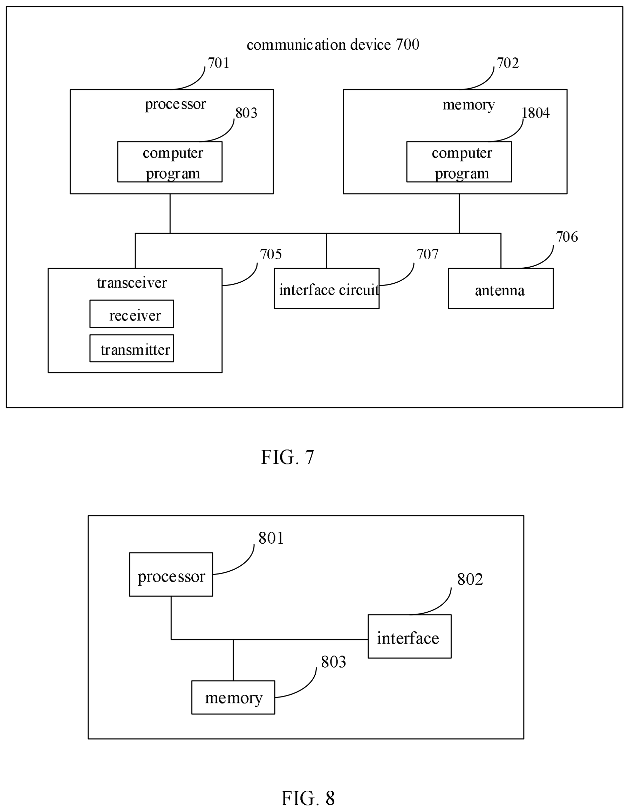

Please refer to FIG. 7. FIG. 7 is a block diagram of a communication device 700 according to an embodiment of the present disclosure. The communication device 700 may be a network device, or a terminal, or a chip, a chip system, a processor, etc. that supports the network device to implement the method, or a chip, a chip system, a processor, etc. that supports the terminal to implement the method. The device is configured to implement the method in the above method embodiments. For details, please refer to the description in the above method embodiments.

The communication device 700 may include one or more processors 701. The processor 701 may be a general-purpose processor or a special-purpose processor. For example, it may be a baseband processor or a central processing unit. The baseband processor is configured to process communication protocols and communication data, and the central processor is configured to control the apparatus for determining a communication resource (such as base stations, baseband chips, terminals, terminal chips, DU or CU, etc.) to execute computer programs and process computer program data.

Optionally, the communication device 700 may also include one or more memories 702 on which a computer program 704 is stored. When the computer program 704 is executed by the memory 702, the communication device 700 implements the method in the above method embodiments. Optionally, the memory 702 may also store data. The communication device 700 and the memory 702 may be set separately or integrated together.

Optionally, the communication device 700 may also include a transceiver 705 and an antenna 706. The transceiver 705 may be called a transceiving unit, a transceiving machine, or a transceiving circuit, etc., to achieve a transceiving function. The transceiver 705 may include a receiver and a transmitter. The receiver may be called a receiver or a receiving circuit, etc., to achieve a receiving function; and the transmitter may be called a transmitter or a transmitting circuit, etc., to achieve a transmitting function.

Optionally, the communication device 700 includes one or more interface circuits 707. The interface circuit 707 is configured to receive code instructions and transmit the code instructions to the processor 701. When the code instructions are running on the processor 701, the communication device 700 is caused to implement the method in the above method embodiments.

In an implementation, the processor 702 may include a transceiver configured to achieve the receiving and transmitting function. For example, the transceiver may be a transceiving circuit, or an interface, or an interface circuit. The transceiving circuit, the interface, or the interface circuit configured to achieve the receiving and transmitting function may be set separately or integrated together. The transceiving circuit, the interface or the interface circuit may be configured to read and write code/data, or the transceiving circuit, the interface or the interface circuit may be configured to transmit/convey signals.

In an implementation, the processor 701 may store a computer program 703. When the computer program 703 is running on the processor 701, the communication device 700 is caused to implement the method in the above method embodiments. The computer program 703 may be solidified in the processor 701. In this way, the processor 701 may be implemented in hardware.

In an implementation, the communication device 700 may include a circuit that may achieve the transmitting or receiving or communicating function in the above method embodiments. The processor and transceiver in the present disclosure may be implemented in an integrated circuit (IC), an analog IC, a radio frequency integrated circuit (RFIC), a mixed-signal IC, an application specific integrated circuit (ASIC), a printed circuit board (PCB), an electronic equipment, etc. The processor and transceiver may also be manufactured with various IC process technologies, such as a complementary metal oxide semiconductor (CMOS), nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The apparatus for determining a communication resource in the above embodiments may be a network device or a terminal, but the scope of the apparatus for determining a communication resource in the present disclosure is not limited to this, and the structure of the apparatus for determining a communication resource may not be restricted by FIG. 7. The apparatus for determining a communication resource may be an independent device or part of a larger device. For example, the apparatus for determining a communication resource may be:

(1) an independent IC, or a chip, or a chip system or a subsystem;

(2) a collection including one or more IC, optionally, the IC collection may also include storage components for storing data and computer programs;
(3) an ASIC, such as a modem;
(4) modules embedded in other devices;
(5) a receiver, a terminal, an intelligent terminal, a cellular phone, a wireless device, a handheld phone, a mobile unit, a vehicle-mounted device, a network device, a cloud device, an artificial intelligence device, etc.;
(6) others.

For the case where the apparatus for determining a communication resource may be a chip or a chip system, please refer to FIG. 8, which is a block diagram of a chip. The chip in FIG. 8 includes a processor 801 and an interface 802. There may be one or more processors 801, and there may be one or more interfaces 802.

Optionally, the chip further includes a memory 803 for storing necessary computer programs and data.

Those skilled in the art may also understand that the various illustrative logical blocks and steps listed in the embodiments of the present disclosure may be implemented by electronic hardware, computer software, or their combination. Whether such a function is implemented in hardware or software depends on specific applications and design requirements of the overall system. Those skilled in the art may, for each specific application, use a variety of methods to achieve the above function, but such implementation shall not be regarded as going beyond the scope of the protection of the embodiments of the present disclosure.

The present disclosure also provides a computer readable storage medium, for storing computer-executable instructions that, when executed by a computer, functions of any one of the above method embodiments are performed.

Those skilled in the art may understand that the first, second, and other various numerical numbers involved in the disclosure are only described for the convenience of differentiation, and are not used to limit the scope of embodiments of the disclosure, or used to indicate the order of precedence.

The term "at least one" in the disclosure may also be described as one or more, and the term "a plurality of" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

The correspondences shown in the tables in this disclosure may be configured or may be predefined. The values of information in the tables are merely examples and may be configured to other values, which are not limited by the disclosure. In configuring the correspondence between the information and the parameter, it is not necessarily required that all the correspondences shown in the tables should be configured. For example, the correspondences shown in certain rows in the tables in this disclosure may not be configured. For another example, the above tables may be adjusted appropriately, such as splitting, combining, and the like. The names of the parameters shown in the titles of the above tables may be other names that may be understood by the apparatus for determining a communication resource, and the values or representations of the parameters may be other values or representations that may be understood by the apparatus for determining a communication resource. Each of the above tables may also be implemented with other data structures, such as, arrays, queues, containers, stacks, linear tables, pointers, chained lists, trees, graphs, structures, classes, heaps, and Hash tables.

The term "predefine" in this disclosure may be understood as define, define in advance, store, pre-store, pre-negotiate, pre-configure, solidify, or pre-fire.

Those skilled in the related art may realize that, in combination with units and algorithm steps of the examples described in embodiments of the present disclosure, may be implemented by electronic hardware or a combination of electronic hardware and computer software. Whether the functions are executed by hardware or software depends on a specific application and a design constraint of the technical solutions. Those skilled in the art may adopt different methods for each specific application to implement the described functions, but such implementation should not be considered as going beyond the scope of the present disclosure.

Those skilled in the art may clearly understand that, a specific working process of a system, an apparatus and a unit described above may refer to a corresponding process in the above method embodiments, which will not be repeated here.

The above are only implementations of the present disclosure. However, the protection scope of the present disclosure is not limited here. Changes and substitutions that may be easily considered by those skilled in the art shall be included within the protection scope of the present disclosure. Therefore, the protection scope of the present disclosure shall be subject to the protection scope of claims.

## Claims

1. A method for determining a communication resource, performed by a first device, comprising:

   determining a scheduling unit in a delay-Doppler (DD) domain,
   wherein the scheduling unit is for an orthogonal time frequency and space (OTFS) modulation system.

**2.** The method of claim 1, wherein parameters of the scheduling unit comprise first parameters and second parameters,
the first parameters comprise:

> $M$, being a number of symbols of the scheduling unit in a delay domain; and
> $N$, being a number of subcarriers of the scheduling unit in a Doppler domain, and
> the second parameters comprise:

>> $t$, being a duration of each symbol of the scheduling unit in the delay domain; and
>> $f$, being a spacing of each subcarrier of the scheduling unit in the Doppler domain.

**3.** The method of claim 2, wherein the first parameters satisfy at least one of:

> $M=M'$, wherein $M'$ represents a number of subcarriers of the scheduling unit in a frequency domain in a time-frequency domain; or
> $N=N'$, wherein $N'$ represents a number of symbols of the scheduling unit in a time domain in a time-frequency domain.

**4.** The method of claim 2 or 3, wherein

> $M = m \times a$, wherein $m$ represents a number of resource blocks (RBs) comprised in the scheduling unit in a frequency domain, $a$ represents a number of subcarriers comprised in each RB, where $m$ is a positive integer; and
> $N = n \times b$, wherein $n$ represents a number of time units comprised in the scheduling unit in a time domain, $b$ represents a number of symbols comprised in each time unit, and $n=2^k$, wherein $k$ is an integer greater than or equal to 0.

**5.** The method of claim 4, wherein in a case where a first cyclic prefix (CP) is inserted into the scheduling unit,

$$a = 12;$$

and

$$b = 14.$$

**6.** The method of claim 4, wherein in a case where a second CP is inserted into the scheduling unit,

> $a = 12$; and
> $b = 12$.

**7.** The method of any one of claims 2 to 6, wherein the second parameters satisfy at least one of:

$$t = \frac{1}{M' f_c},$$

wherein $M'$ represents a number of subcarriers of the scheduling unit in a frequency domain in a time-frequency domain, and $f_c$ represents a spacing of each subcarrier in the frequency domain in the time-frequency domain; or

$$f = \frac{1}{N'T},$$

wherein $N'$ represents a number of symbols of the scheduling unit in a time domain in a time-frequency domain, and $T$ represents a duration of each symbol in the time domain in the time-frequency domain.

**8.** The method of claim 7, wherein in a case where a first CP or a second CP is inserted into the scheduling unit,

$$f_c = 15 \times 10^3 \times 2^k,$$

wherein $k$ is an integer greater than or equal to 0; and

$$T' = \frac{1}{15 \times 10^3 \times 2^k}.$$

**9.** The method of claim 7, wherein in a case where a first CP is not inserted into the scheduling unit,

$$f_c = 15 \times 10^3 \times 2^k,$$

wherein $k$ is an integer greater than or equal to 0; and

$$T = \frac{1}{14 \times 10^3 \times 2^k}.$$

**10.** The method of claim 7, wherein in a case where a second CP is not inserted into the scheduling unit,

$$f_c = 15 \times 10^3 \times 2^k,$$

wherein $k$ is an integer greater than or equal to 0; and

$$T' = \frac{1}{12 \times 10^3 \times 2^k}.$$

**11.** The method of claim 10, where $k$ is 2.

**12.** The method of any one of claim 6 or 8, wherein a sampling period for CP insertion into the scheduling unit is represented by T1, a number of sampling points is represented by K, and the CP is inserted every $l$ symbols in the scheduling unit in the time domain, wherein $1 \le l \le 14$.

**13.** The method of claim 12, wherein T1 is a time unit, K is 2048, and $l = 1$,
wherein a number of sampling points for a 0-th CP and a 7-th CP of the scheduling unit in the time domain is 160, and a number of sampling points for other CPs is 144.

**14.** The method of claim 12, wherein T1 is one time unit, K is 2048, and $1 < l \le 14$,

wherein the CP is inserted at starting positions of consecutive $l$ symbols, and a number of sampling points for a $k$-th CP inserted in T1 is:

$$K^k_{CP} = \sum_{i=1}^{I} K_i \, ,$$

wherein $K_i$ represents a number of sampling points for a CP inserted to an $i$-th symbol in a case where the CP is inserted to each symbol in T1, and $i \le l$.

**15.** The method of any one of claims 1 to 14, further comprising:
mapping a signal and/or data to the scheduling unit.

**16.** An apparatus for determining a communication resource, comprising:

a processing unit, configured to determine a scheduling unit in a delay-Doppler (DD) domain, wherein the scheduling unit is for an orthogonal time frequency and space (OTFS) modulation system.

**17.** A communication device, comprising: a transceiver; a memory; and a processor, connected to the transceiver and the memory, and configured to control wireless signal transmission and reception of the transceiver by executing computer-executable instructions on the memory and to implement the method of any one of claims 1 to 15.

**18.** A computer storage medium, for storing computer-executable instructions that, when executed by a processor, cause the method of any one of claims 1 to 15 to be implemented.

101

determining a scheduling unit in a DD domain

FIG. 1

$x(k,l)$ → ISFFT → $X[n,m]$ → Heisenberg Transform → $s(t)$ → channel h (r,v) → $r(t)$ → Wigner Transform → $Y[n,m]$ → SFFT → $y(k,l)$

time-frequency domain

DD domain

FIG. 2

FIG. 3

FIG. 4

501

mapping a signal and/or data to the scheduling unit

FIG. 5

Apparatus 600 for determining a communication resource

610

Processing unit

FIG. 6

communication device 700

701

processor

803

computer program

702

memory

1804

computer program

705

transceiver

receiver

transmitter

707

interface circuit

706

antenna

FIG. 7

801

processor

802

interface

803

memory

FIG. 8

## INTERNATIONAL SEARCH REPORT

| International application No. |
| --- |
| **PCT/CN2023/100852** |

| A. | CLASSIFICATION OF SUBJECT MATTER |
| --- | --- |

H04L 27/26(2006.01)i

According to International Patent Classification (IPC) or to both national classification and IPC

| B. | FIELDS SEARCHED |
| --- | --- |

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNTXT; CNKI; VEN: 正交时频空, 时延 w 多普勒, 调度, 管理, 资源, 符号, 子载波, 循环前缀, OTFS, DD, dispatch+, schedul +, manag+, resource, symbol, subcarrier, CP

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 113726715 A (ZHUHAI YUEXIAN TECHNOLOGY CO., LTD.) 30 November 2021 (2021-11-30) <br> description, paragraphs [0031]-[0048], [0120] and [0134]-[0143], and figure 2 | 1-18 |
| A | CN 111919394 A (COHERE TECHNOLOGIES) 10 November 2020 (2020-11-10) <br> entire document | 1-18 |
| A | CN 114916039 A (VIVO COMMUNICATION TECHNOLOGY CO., LTD.) 16 August 2022 (2022-08-16) <br> entire document | 1-18 |
| A | EP 3826255 A1 (VOLKSWAGEN AG) 26 May 2021 (2021-05-26) <br> entire document | 1-18 |
| A | WO 2020238573 A1 (HUAWEI TECHNOLOGIES CO., LTD.) 03 December 2020 (2020-12-03) <br> entire document | 1-18 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **27 February 2024** | **11 March 2024** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/100852**

| Patent document cited in search report | | | Publication date (day/month/year) | Patent family member(s) | | | Publication date (day/month/year) |
|---|---|---|---|---|---|---|---|
| CN | 113726715 | A | 30 November 2021 | None | | | |
| CN | 111919394 | A | 10 November 2020 | EP | 3704802 | A1 | 09 September 2020 |
| | | | | EP | 3704802 | A4 | 04 August 2021 |
| | | | | EP | 3704802 | B1 | 03 January 2024 |
| | | | | US | 2020259697 | A1 | 13 August 2020 |
| | | | | US | 10951454 | B2 | 16 March 2021 |
| | | | | WO | 2019089986 | A1 | 09 May 2019 |
| | | | | US | 2021203539 | A1 | 01 July 2021 |
| | | | | US | 11296919 | B2 | 05 April 2022 |
| CN | 114916039 | A | 16 August 2022 | None | | | |
| EP | 3826255 | A1 | 26 May 2021 | EP | 3826255 | B1 | 15 June 2022 |
| | | | | WO | 2021099362 | A1 | 27 May 2021 |
| | | | | US | 2022417062 | A1 | 29 December 2022 |
| WO | 2020238573 | A1 | 03 December 2020 | None | | | |

Form PCT/ISA/210 (patent family annex) (July 2022)